# FASCICULE DE BREVET EUROPEEN

(11) **EP 1 037 446 B1**
(45) Date de publication et mention de la délivrance du brevet: **01.08.2007**
(21) Numéro de dépôt: 00870034.6
(22) Date de dépôt: 06.03.2000
(51) Int. Cl.: H04M 1/02, G07F 7/10, G06K 7/00

(54) **Appareil multifonctionnel portable et programmable pour le transfert de données et la transmission vocale**
Tragbare und programmierbare Multifunktionseinrichtung zur Daten- und Sprachübertragung
Portable and programmable multifunctional device for data and voice transfer

(30) Priorité: 15.03.1999 BE 9900177
(43) Date de publication de la demande: 20.09.2000
(73) Titulaire: Ianni, Francesco, 4700 Eupen (BE)
(72) Inventeur: Ianni, Francesco, 4700 Eupen (BE)
(74) Mandataire: Lerho, Marc J. A.

(56) Documents cités:
- EP-A- 0 805 425
- WO-A-97/41499
- DE-U- 29 621 063
- US-A- 5 003 472
- US-A- 5 408 078
- US-A- 5 489 773
- US-A- 5 679 943

## Description

### Objet de l'invention

La présente invention a pour objet un appareil portable de dimensions réduites et programmable, permettant l'acquisition de données et leur transfert vers un ordinateur fixe, par exemple de type PC, au moyen d'une liaison radio.

L'invention a également pour objet un appareil comme ci-dessus, permettant la transmission vocale.

### Etat de la technique

De nombreux appareils permettant la transmission de données par radio sont connus. De tels appareils comprennent un ou plusieurs périphériques ou interfaces pilotés par un microprocesseur, tels que clavier, écran d'affichage à cristaux liquides (LCD), lecteur de cartes (magnétiques, à puce) ou codes à barres, interface série RS232 ou autres et bien sûr interfaces radio ou vocale, notamment GSM.

Ces appareils sont utilisés ou susceptibles de l'être par exemple dans le secteur de l'hôtellerie et la restauration, pour la saisie, le traitement et la facturation de commandes, ou encore lorsque la communication à distance est requise lors d'opérations, par exemple en usine ou sur chantier (téléphone cellulaire, sémaphone). Un autre type d'application est l'utilisation comme terminal de paiement bancaire utilisant des cartes magnétiques ou cartes à puce.

Les appareils de l'état de la technique sont cependant souvent inadaptés aux différentes applications décrites car, étant basés sur l'utilisation de PC portables, ils sont trop volumineux ou trop lourds et donc peu pratiques. De plus, ils ne disposent pas nécessairement simultanément de toutes les fonctionnalités citées ci-dessus et en particulier la lecture de cartes magnétiques et à puce, la lecture de codes à barres et la transmission radio vocale et digitale (data).

Le document WO-A-97 41499 propose un appareil portable pour la vérification de crédit lors d'une transaction commerciale. Les données de l'utilisateur sont saisies électroniquement et mémorisées dans l'appareil et ensuite transmises notamment par liaison radio à un ordinateur hôte, qui, après vérification, envoie en retour l'information d'acceptation. Les périphériques de saisie peuvent être des lecteurs de cartes magnétiques, à puce (microprocesseur) ou de codes à barres. Cet appareil inclut de nombreuses fonctions pour l'identification de l'utilisateur ; il est donc encombrant, très complexe au niveau du software incorporé et par conséquent coûteux à réaliser.

Le document DE-U-296 21 063 propose un téléphone cellulaire incorporant en outre des fonctions commutables de lecture de carte bancaire, affichage de la date et l'heure, radio-réveil, etc. Cet appareil permet à l'utilisateur de connaître à tout moment la situation de son porte-monnaie électronique.

Enfin, le document US-A-5 489 773 divulgue un appareil portable pour effectuer des transactions commerciales électroniques, muni d'un lecteur de cartes magnétiques et d'un lecteur de codes à barres. Il permet d'effectuer des transactions avec carte de crédit. Les autorisations de l'organisme de crédit sont obtenues via une connexion téléphonique classique avec un ordinateur fixe. La connexion entre celui-ci et le portable peut être une liaison radio. Cet appareil est également compliqué et encombrant de par le fait qu'il contient notamment une imprimante.
Le document US-A-5,003,472 divulgue un appareil pour la prise de commandes dans un restaurant comprenant un terminal hôte et un terminal portable sans fil. Les commandes sont entrées dans le terminal sans fil et envoyées au système hôte par liaison radio. Le terminal portable comporte un tableau à codes-barres de lignes de menu et un stylet laser de lecture pour la sélection de lignes de menus. Les commandes sont encodées par scannage des sélections de manière similaire à celle de l'utilisation d'un clavier de restaurant conventionnel. Les terminaux et les imprimantes sont connectés au système hôte et sont utilisés pour afficher les commandes entrées aux terminaux portables à l'usage du chef en cuisine et pour imprimer les commandes reçues.

### Buts de l'invention

La présente invention vise à proposer un appareil qui remédie aux inconvénients de l'état de la technique.

La présente invention a notamment pour but de proposer un dispositif léger muni de toutes les fonctionnalités permettant son utilisation dans un très grand nombre de domaines tels que service restaurant, achats en boutique ou grande surface, usage domestique privé tel que le « home banking » et dans des endroits d'accès protégé ou réglementé tels que le milieu médical, voire industriel.

Un but complémentaire de l'invention est de proposer un appareil électronique miniaturisé, présentant à la fois une grande simplicité de hardware et une grande simplicité de software, ce qui conduit à un coût de fabrication minimal et est très favorable à une large diffusion commerciale. Il est dès lors impératif qu'un traitement de données minimal soit effectué dans le portable lui-même et qu'il soit dépourvu de phériphériques encombrants tel que des imprimantes.

### Eléments caractéristiques de l'invention

La présente invention concerne un appareil multifonctionnel portable et programmable, de dimensions réduites, comprenant un clavier, un écran à cristaux liquides, une alarme, ainsi qu'au moins un périphérique de lecture de codes à barres, de cartes magnétiques et de cartes à puce, caractérisé en ce que des données acquises par un desdits périphériques de lecture sont transmises par liaison radio à un ordinateur central fixe où lesdites données sont traitées ou exploitées et en ce qu'une transmission vocale est réalisée vers d'autres appareils par liaison radio, les trois types de périphériques de lecture coexistant simultanément dans ledit appareil portable.

Avantageusement, l'appareil présente une longueur inférieure à 18 cm, une largeur maximale inférieure à 9 cm et une largeur minimale inférieure à 6 cm.

De préférence, la liaison radio est une liaison hertzienne locale ou GSM (téléphonie cellulaire).

L'invention concerne également un procédé de communication, dans le secteur de l'hôtellerie et de la restauration, au moyen d'un appareil multifonctionnel portable et programmable, de dimensions réduites, utilisé par un serveur ou garçon de salle, et comprenant un clavier, un écran à cristaux liquides, une alarme, des périphériques de lecture de codes à barres, de cartes magnétiques et de cartes à puce ; d'un ordinateur central fixe et d'un émetteur-récepteur radio utilisé en cuisine par un chef ou d'autres membres du personnel; caractérisé en ce que :
- des données de type commande sont acquises dans ledit appareil au moyen d'au moins un desdits périphériques de lecture par le serveur ou garçon de salle ;
- les commandes sont transmises par le serveur ou garçon de salle, au moyen dudit appareil portable et programmable, par liaison radio en mode data à un ordinateur central fixe, muni d'un émetteur-récepteur, et connecté à des imprimantes, et dans lequel lesdites données sont traitées ou exploitées ;
- les commandes imprimées sur papier sont remises au chef ou au personnel ;
- des informations vocales sont échangées par liaison radio entre le serveur ou garçon de salle et le chef ;
- sur requête du serveur ou garçon de salle à l'ordinateur central, des additions sont imprimées et mises à disposition du serveur ;
- un client paie le montant de l'addition par carte bancaire, carte de crédit ou carte de type porte-monnaie électronique, en utilisant ledit appareil comme terminal de paiement avec autorisation, sur présentation dudit appareil par le serveur ou garçon de salle.

Enfin, l'invention concerne l'utilisation dans le secteur de l'hôtellerie et restauration d'un appareil multifonctionnel portable et programmable selon la revendication 1.

Des solutions commerciales similaires, voire plus évoluées, existent. Cependant, l'originalité de l'invention repose essentiellement sur trois points : la simplicité du hardware, la simplicité du software ainsi que la palette de périphériques accessibles simultanément.

La simplicité du hardware est possible par le fait que les données ne sont pas traitées a priori dans le portable lui-même, mais dans l'ordinateur fixe avec lequel il peut échanger des informations. Le portable lui-même sert donc de capteur et de transmetteur de données accessibles localement vers un système global centralisé.

Contrairement à de nombreuses réalisations de portables existantes, le software est très rudimentaire. Toute réception de données en provenance des diverses sources est encodée sous forme d'un message codé transmis vers le PC. Ainsi, à l'aide d'un petit programme de traduction sur le PC, on peut envoyer des messages applicatifs vers le programme de traitement se trouvant dans le PC. Le petit software dans le portable peut avantageusement être universel.

### Brève description des dessins

La figure 1 représente une vue du dessus de l'appareil selon une forme d'exécution préférée de l'invention.

La figure 2 représente un schéma bloc de l'appareil selon l'invention.

### Description détaillée de l'invention

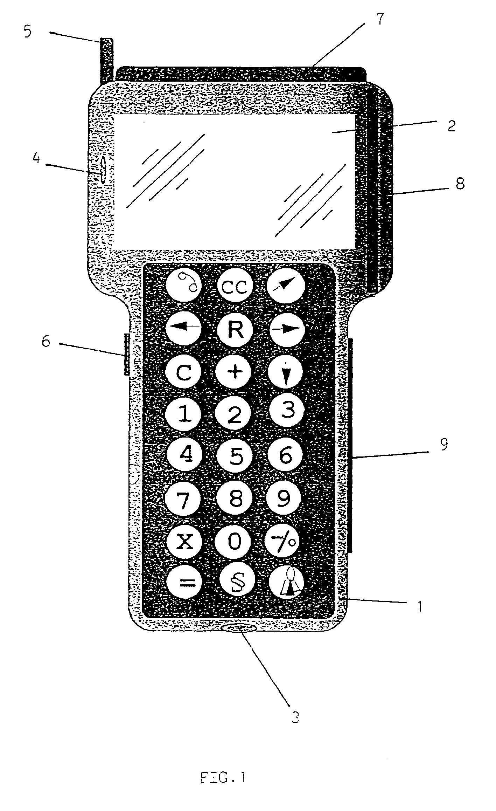

A la figure 1, on a représenté l'appareil selon une forme d'exécution préférée de l'invention. Sur la face avant, on trouve un clavier 1 à 24 touches, un affichage à cristaux liquides 2, les lecteurs de code à barres 7, carte magnétique 8 et à puce 9 respectivement, un micro 3, un écouteur 4 et une antenne 5 pour la transmission vocale, l'antenne étant également utilisée pour la transmission data. Une touche latérale 6 permet l'activation de la lecture de codes à barres.

Cet appareil, selon la forme d'exécution retenue, a une longueur d'environ 16 cm, une largeur maximale de 8 cm environ et une largeur minimale de 5 cm environ.

Le matériel (hardware) est constitué du portable lui-même et d'un dispositif de réception de données radio et leur mise en forme en vue de leur transmission vers un PC par une interface classique.

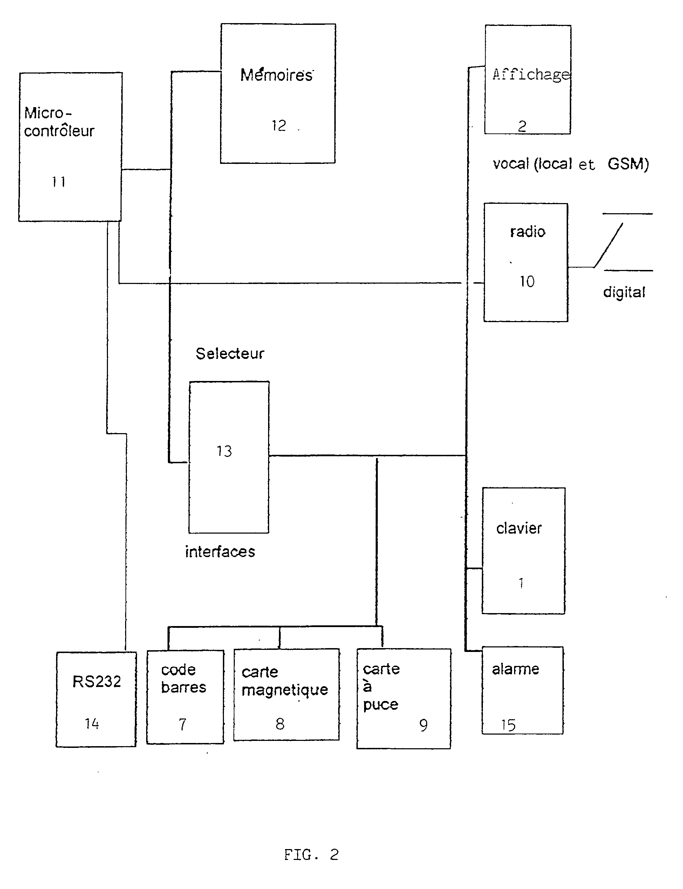

Les différentes fonctionnalités de l'appareil selon l'invention sont présentées à la figure 2.

L'appareil comprend une carte-mère munie d'un microprocesseur ou un microcontrôleur 11, de blocs de mémoires 12 et d'un sélecteur d'interfaces 13. Le microprocesseur ou microcontrôleur 11 peut recevoir ou transmettre des données sans passer par le sélecteur d'interfaces, au moyen d'au moins une liaison série RS232 14 et d'une liaison radio 10 à faible puissance dans la bande autorisée (par ex. 433 MHz) pouvant être commutée en mode vocal ou digital (data). Les différents périphériques ou interfaces accessibles via le sélecteur d'interfaces sont classiquement un clavier 1, écran d'affichage 2 à cristaux liquides LCD et accessoirement une alarme 15, pour la communication avec l'utilisateur. De plus, les périphériques suivants sont accessibles via le sélecteur d'interface : un lecteur de codes à barres 7, un lecteur de carte magnétique 8 et un lecteur de carte à puce 9.

Un exemple de microcontrôleur pouvant être utilisé est le microcontrôleur Siemens 80C517, disposant de 2 Koctets de mémoire RAM externe « On Chip ». Celui-ci peut avantageusement être remplacé par une carte de type Java^{®} Smart Card ou Microsoft^{®} Smart Card, permettant une particularisation et une protection de grande efficacité.

On utilise un clavier à 24 touches avec son contrôleur, un écran à cristaux liquides LCD de type graphique ou alphanumérique avec 2 lignes de 16 caractères.

Le transmetteur radio en émission et réception peut être utilisé soit en mode data soit en mode vocal.

En mode data, le transmetteur transforme une sortie série asynchrone du microcontrôleur en une onde radio modulée en fréquence autour d'une porteuse à 433 MHz en émission et opère la transformation inverse en réception.

En mode vocal, un autre transmetteur radio fonctionne en mode « walkie-talkie » via un micro et un haut-parleur incorporés à l'appareil.

L'utilisation d'un DSP permet l'adaptation de la même interface dans la bande des 2 GHz pour la transmission des données et de la parole.

Comme les transmissions radio sont effectuées à faible puissance, on obtient une réception correcte jusqu'à une centaine de mètres environ. Il ne s'agit donc pas a priori d'une application de téléphonie cellulaire (GSM), mais la fonctionnalité GSM peut être incorporée sans problème pour les transmissions non locales, telles que le « home banking » par exemple.

Dans une forme d'exécution préférée de l'invention, une interface lecteur de codes à barres est reliée en interne à une interface série du microcontrôleur. Un second microcontrôleur esclave gère la transmission de données , par ses lignes série, en provenance :
- d'un lecteur de cartes magnétiques miniaturisé conforme aux spécifications ISO 7810, 7811 et 7813 ;
- d'un lecteur de cartes à puce miniaturisé permettant la lecture des cartes à puce conformes à la norme ISO 7816, compatible Visa^{®} et MasterCard^{®}.

Le matériel contient également le système d'alimentation pour la recharge et le contrôle des batteries et, de manière optionnelle, un buzzer pour les alarmes éventuelles.

Le logiciel (software) est modulaire et est composé de trois types de modules : les pilotes de périphériques, le pilote spécifique pour les liaisons radio et le programme de gestion des messages venant du PC et vers le PC. En ce qui concerne le pilote de communication radio, on utilise un protocole multipoint orienté caractère. Un contrôle de CRC vérifie la validité des transmissions. Le protocole choisi supporte toutes les options des protocoles XMODEM et ZMODEM.

Les avantages obtenus grâce à l'invention sont liés au fait que l'utilisateur peut d'une part se connecter, au moyen d'un appareil de poche, à tous les systèmes standard de saisie électronique de données et d'autre part permettre une interaction très souple avec des applications locales, PC ou autres, et avec les standards actuels de paiement bancaire par carte magnétique ou à puce tels que Bancontact^{®}, Carte Bleue^{®} ou visa^{®}, MasterCard^{®}, American Express^{®}, Diners's Club^{®} , etc. ou de porte-monnaie électronique tel que Proton^{®}.

En ce qui concerne les nombreuses utilisations potentielles de l'invention, nous présentons ci-après deux exemples.

### Exemple 1

Dans le secteur hôtellerie, restauration et débits de boisson, l'utilisateur est le garçon de café ou de salle. L'appareil permet à celui-ci de prendre des commandes correspondant à des articles (plats, boissons) préalablement encodés dans la mémoire ou encore grâce à la lecture d'un code à barres figurant sur la carte. Le portable, très maniable et de petite taille, peut être aisément mis dans la poche voire sur le plateau de l'utilisateur. Après saisie, les données sont transmises par radio à un ordinateur central (par exemple serveur PC). Si des renseignements vocaux sont nécessaires (ex. cuisson de la viande, retard du service), le garçon peut communiquer avec la cuisine, en utilisant la transmission radio vocale, le chef étant également muni d'un émetteur-récepteur vocal. A la fin du repas, le garçon peut demander l'addition en interrogeant l'ordinateur central, celle-ci étant calculée et imprimée automatiquement. Le portable peut enfin être utilisé par le client comme terminal de paiement, soit en lecture d'une carte bancaire, de crédit, un porte-monnaie électronique, à puce ou magnétique, avec autorisation. L'appareil selon l'invention est donc particulièrement avantageux dans le cas de cantines ou restaurants de grande taille.

Pour ne pas entraver la portabilité de l'appareil selon l'invention, les imprimantes utilisées n'ont pas été incorporées au portable. Les différentes imprimantes (cuisine, boissons, addition, carte de crédit, etc.) sont connectées à l'ordinateur central situé dans une autre pièce (par exemple réception ou direction). Les commandes « cuisine » imprimées sont transmises au chef au fur et à mesure.

### Exemple 2

Dans le cas d'un chantier géographiquement étendu, ou encore dans lequel les opérateurs peuvent être difficilement accessibles pour des raisons techniques (galeries sous-terraines, zones radioactives par exemple), un chef d'équipe peut donner des instructions à un opérateur soit en mode vocal, soit en mode data (par exemple signal sémaphone). De même, une telle utilisation peut se concevoir lors d'opérations médicales sur place ou de secours dans un environnement difficile (par exemple, tremblements de terre, recherche de spéléologues ou alpinistes disparus) .

## Revendications

1. Appareil multifonctionnel portable et programmable, de dimensions réduites, comprenant un clavier (1), un écran à cristaux liquides (2), ainsi que simultanément un lecteur de codes à barres (7) et des lecteurs miniaturisés (8, 9) respectivement de cartes magnétiques et de cartes à puce, **caractérisé en ce que** l'appareil comprend une liaison radio (10) à faible puissance pouvant être commutée en mode « data » ou vocal et implémentée sous forme d'une même interface DSP et de deux radiotransmetteurs en émission/réception, respectivement pour la communication de données acquises par lesdits lecteurs à un ordinateur central fixe où lesdites données sont traitées ou exploitées et pour une transmission radio vocale vers d'autres appareils.

2. Appareil selon la revendication 1, **caractérisé en ce que**, en mode « data », le premier radiotransmetteur transforme en émission une sortie série asynchrone du microcontrôleur en une onde radio modulée en fréquence autour d'une porteuse et inversement en réception.

3. Appareil selon la revendication 1 ou 2, **caractérisé en ce que**, en mode vocal, le second radiotransmetteur fonctionne en mode « walkie-talkie » via un micro (3) et un haut-parleur (4) incorporés à l'appareil.

4. Appareil selon la revendication 1, 2 ou 3, **caractérisé en ce que** la bande de fréquence utilisée par la liaison radio est centrée autour de 433MHz ou 2GHz.

5. Appareil selon l'une quelconque des revendications précédentes, **caractérisé en ce qu'**il comprend un microprocesseur ou un microcontrôleur (11), un bloc de mémoires (12) et un sélecteur d'interfaces (13) permettant au microcontrôleur de recevoir des données desdits lecteurs.

6. Appareil selon l'une quelconque des revendications précédentes, **caractérisé en ce qu'**une liaison GSM est incorporée pour les transmissions non-locales.

7. Procédé de communication, dans le secteur de l'hôtellerie et de la restauration, mettant en oeuvre l'appareil multifonctionnel portable et programmable, de dimensions réduites, selon l'une quelconque des revendications précédentes, utilisé par un serveur ou garçon de salle, et mettant en oeuvre également un ordinateur central fixe et un émetteur-récepteur radio supplémentaire utilisé en cuisine par un chef ou d'autres membres du personnel; **caractérisé par** au moins une partie des étapes suivantes :
- des données de type commande sont acquises dans ledit appareil multifonctionnel au moyen d'un desdits lecteurs par le serveur ou garçon de salle ;
- les commandes sont transmises par le serveur ou garçon de salle, au moyen dudit appareil multifonctionnel, par liaison radio en mode «data» à l'ordinateur central fixe, muni d'un émetteur-récepteur, dans lequel lesdites données sont traitées ou exploitées et connecté à une imprimante pour l'impression sur papier desdites commandes à destination du chef ou du personnel ;
- si nécessaire, des renseignements sont échangés par liaison radio entre le serveur qui utilise alors l'appareil multifonctionnel en mode vocal et le chef qui utilise l'émetteur-récepteur radio supplémentaire ;
- sur requête du serveur ou garçon de salle à l'ordinateur central au moyen de l'appareil multifonctionnel, des additions sont imprimées au moyen de l'imprimante précitée pour la mise à disposition du serveur ;
- un client paie le montant de l'addition par carte bancaire, carte de crédit ou carte de type porte-monnaie électronique, en utilisant ledit appareil multifonctionnel comme terminal de paiement avec autorisation, sur présentation dudit appareil par le serveur ou garçon de salle.

8. Utilisation de l'appareil multifonctionnel portable et programmable, de dimensions réduites, selon l'une quelconque des revendications 1 à 6, sur chantier géographiquement étendu ou dans des conditions d'accessibilié difficiles, ou encore dans le cas d'opérations médicales ou de secours dans un environnement difficile, selon laquelle un chef d'équipe donne des instructions à un opérateur soit en mode vocal, soit en mode « data ».

## Claims

1. Portable and programmable multifunctional device of a small size comprising a keyboard (1), a liquid-crystal screen (2) as well as a barcode reader (7) and miniaturised readers (8, 9) for magnetic cards and chip cards respectively, **characterised in that** the device comprises a low-power radio link (10) that may be switched in the "data" mode or in the voice mode and that is designed in the form of a single DSP interface and two transmitting/receiving radio transmitters for communicating data captured by said readers to a fixed a vocal radio transmission to other devices, respectively.

2. Device according to Claim 1, **characterised in that**, in the "data" mode, the first radio transmitter, upon transmission, transforms an asynchronous serial output from the microcontroller into a radio wave that is frequency-modulated around a carrier wave and vice versa upon reception.

3. Device according to Claim 1 or 2, **characterised in that**, in the voice mode, the second radio transmitter operates in a "walkie-talkie" mode via a microphone (3) and a loudspeaker (4) incorporated into the device.

4. Device according to Claim 1, 2 or 3, **characterised in that** the frequency range used by the radio link is centred around 433 MHz or 2 GHz.

5. Device according to any one of the preceding claims, **characterised in that** it comprises a microprocessor or microcontroller (11), a memory bank (12) and an interface selector (13) that allows the microcontroller to receive data from said readers.

6. Device according to any one of the preceding claims, **characterised in that** a GSM link is incorporated for non-local transmissions.

7. Communication method in the hotel and catering sector implementing the portable and programmable multifunctional device of a small size according to any one of the preceding claims used by a waiter or porter and also implementing a fixed central computer and an additional radio transmitter/receiver used in the kitchen by the chef or by other members of staff; **characterised by** at least some of the following stages:
- order-type data are recorded by the waiter or porter in said multifunctional device by means of one of said readers;
- the orders are transmitted by the waiter or porter by means of said multifunctional device by radio link in the "data" mode to the fixed central computer, that is provided with a transmitter/receiver, in which said data are processed or used and that is connected to a printer for printing paper copies of said orders intended for the chef or staff;
- if necessary, instructions will be exchanged by radio link between the waiter who is thus using the multifunctional device in the voice mode and the chef who is using the additional radio transmitter/receiver;
- on the waiter's or porter's request to the central computer by means of the multifunctional device, bills are printed by means of the above-mentioned printer and available to the waiter;
- a customer pays the total amount of the bill by a bank card, credit card or a prepaid electronic card, using said multifunctional device as an authorised payment terminal, upon presentation of said device by the waiter or porter.

8. Use of the portable and programmable multifunctional device of a small size according to any one of Claims 1 to 6 on a geographically extensive premises or in conditions of difficult accessibility or even in the case of medical or rescue operations in a difficult environment, by which a team leader gives instructions to an operator either in the voice mode or in the "data" mode.

## Patentansprüche

1. Tragbares und programmierbares, multifunktionales Gerät mit reduzierten Abmessungen, das eine Tastatur (1), einen LCD-Bildschirm (2) sowie gleichzeitig einen Strichcodeleser (7) sowie miniaturisierte Lesegeräte (8, 9) jeweils für Magnet- und Chipkarten enthält, **dadurch gekennzeichnet, dass** das Gerät eine Funkverbindung (10) mit geringer Leistung umfasst, die zwischen dem "Daten"- oder dem Sprachmodus umschalten kann und in Form einer gemeinsamen DSP-Schnittstelle und zweier Funk-Sender/-Empfänger in Gang gesetzt wird, die jeweils für die Übermittlung der von den Lesegeräten erfassten Daten zu einem ortsfesten Zentralcomputer dienen, an dem die besagten Daten verarbeitet oder genutzt werden, sowie für eine Funkübertragung der Stimmdaten an andere Geräte.

2. Gerät gemäß Anspruch 1, **dadurch gekennzeichnet, dass** im "Datenmodus" der erste Funksender bei der Datenaussendung eine asynchrone serielle Ausgabe des Mikroprozessors in eine Funkwelle, welche in einer Frequenz um die Trägerwelle moduliert ist, umwandelt sowie umgekehrt beim Datenempfang.

3. Gerät gemäß Anspruch 1 oder 2, **dadurch gekennzeichnet, dass** im Sprachmodus der zweite Funksender im "Walkie-Talkie"-Modus über ein in das Gerät integriertes Mikrofon (3) und einen Lautsprecher (4) arbeitet.

4. Gerät gemäß Anspruch 1, 2 oder 3, **dadurch gekennzeichnet, dass** das bei der Funkverbindung verwendete Frequenzband sich um den Wert 433 MHz oder 2 GHz konzentriert.

5. Gerät gemäß einem der vorherigen Ansprüche, **dadurch gekennzeichnet, dass** es einen Mikroprozessor oder einen Mikrokontroller (11), einen Speicherblock (12) und eine Schnittstellenwahlvorrichtung (13) enthält, die es dem Mikrokontroller ermöglicht, die Daten von den besagten Lesegeräten zu empfangen.

6. Gerät gemäß einem der vorherigen Ansprüche, **dadurch gekennzeichnet, dass** eine GSM-Verbindung für nichtlokale Übertragungen im Gerät enthalten ist.

7. Kommunikationsverfahren für den Hotel- und Gaststättenbereich, das ein multifunktionales, tragbares und programmierbares Gerät mit reduzierten Abmessungen gemäß einem beliebigen der vorherigen Ansprüche einsetzt; dies wird von einer Bedienung oder einem Kellner verwendet und setzt gleichermaßen einen ortsfesten Zentralrechner und einen Funksender/-Empfänger ein, der ergänzend in der Küche durch den Koch oder andere Mitarbeiter verwendet wird; dies Verfahren ist **dadurch gekennzeichnet, dass** es mindestens einen Teil der folgenden Schritte einsetzt:
- Daten vom Typ Bestellung werden im besagten multifunktionalen Gerät mithilfe eines der besagten Lesegeräte vom Kellner bzw. der Bedienung erfasst;
- Die Bestellungen werden vom Kellner bzw. der Bedienung mit Hilfe des besagten multifunktionalen Geräts über eine Funkverbindung im Datenmodus an den ortsfesten Zentralrechner übertragen, der mit einem Sender-Empfänger ausgestattet ist und in dem die besagten Daten verarbeitet oder genutzt werden und der an einen Drucker zum Ausdruck der Bestellungen im Papierformat für den Koch oder die Mitarbeiter angeschlossen ist;
- Falls erforderlich werden Informationen über eine Funkverbindung zwischen dem das multifunktionale Gerät im Sprachmodus verwendenden Kellner und dem Koch ausgetauscht, der seinerseits den ergänzenden Funk-Sender/-Empfänger verwendet;
- Auf Anforderung durch den Kellner oder die Bedienung, die mithilfe des multifunktionalen Geräts an den Zentralrechner geschickt wird, werden die Rechnungen mithilfe des zuvor genannten Druckers ausgedruckt und für den Kellner bereitgestellt;
- Ein Gast bezahlt den Rechnungsbetrag mit Bankkarte, Kreditkarte oder mit Geldkarte, indem das besagte multifunktionale Gerät als Zahlungsterminal mit Berechtigungszuweisung bei Vorlage besagten Geräts durch den Kellner oder die Bedienung verwendet wird.

8. Nutzung des multifunktionalen, tragbaren und programmierbaren Gerätes mit reduzierten Abmessungen gemäß einem der Ansprüche 1 bis 6 auf geografisch weitläufigen Baustellen bzw. solchen mit schwierigen Zugangsbedingungen oder auch für den Fall von medizinischen oder rettungstechnischen Operationen unter schwierigen Umgebungsbedingungen, bei denen der Teamleiter dem ausführenden Mitarbeiter Anweisungen entweder im Sprach- oder im "Datenmodus" erteilt.
